# EUROPÄISCHE PATENTSCHRIFT

(11) **EP 0 558 986 B1**
(45) Veröffentlichungstag und Bekanntmachung des Hinweises auf die Patenterteilung: **01.05.1996**
(21) Anmeldenummer: 93102373.3
(22) Anmeldetag: 16.02.1993
(51) Int. Cl.: C08F 283/10, C09D 5/44

(54) **Wasserverdünnbare Überzugsmittel**
Water-dilutable coatings
Revêtements diluables dans l'eau

(30) Priorität: 29.02.1992 DE 4206431
(43) Veröffentlichungstag der Anmeldung: 08.09.1993
(73) Patentinhaber: BASF Lacke + Farben AG, D-48165 Münster-Hiltrup (DE)
(72) Erfinder: Huemke, Klaus, Dr., W-6701 Friedelsheim (DE); Faul, Dieter, Dr., W-6702 Bad Duerkheim (DE); Heimann, Ulrich, Dr., W-4400 Münster (DE)
(74) Vertreter: Karau, Wolfgang, Dr.

(56) Entgegenhaltungen:
- EP-A- 0 035 130
- EP-A- 0 167 029
- EP-A- 0 262 069
- EP-A- 0 381 899
- US-A- 4 639 299
- ADVANCES IN CHEMISTRY SERIES - MULTICOMPONENT POLYMER MATERIALS, AMERICAN CHEMICAL SOCIETY 1986, Seiten 211 - 230 KLEMPNER ET AL. 'Two- and Three- Component Interpenetrating Polymer Networks'

## Beschreibung

Die vorliegende Erfindung betrifft wasserverdünnbare Überzugsmittel, enthaltend
A. eine Mischung aus
   - A₁. 50-95 Gew.-%: einer oder mehrerer oligomerer oder polymerer Polyadditions- oder Polykondensationsverbindungen mit einem mittleren Molekulargewicht von 200 bis 20.000, welche pro Molekül mindestens zwei Hydroxylgruppen und mindestens zwei primäre und/oder sekundäre Aminogruppen enthalten, und
   - A₂. 5-50 Gew.-%: eines gegenüber der Komponente A₁ reaktiven Vernetzers
   und
B. eine Mischung aus
   - B₁.90-99,9 Gew.-%: einer oder mehrerer radikalisch polymerisierbarer Verbindungen des mittleren Molekulargewichts von 100 bis 10.000, die pro Molekül mindestens zwei olefinische Doppelbindungen enthalten, und
   - B₂. 0,1-10 Gew.-%: eines Radikalstarters mit einer Zerfallstemperatur im Bereich von 50-150°C,
   wobei das Mengenverhältnis der Mischung A zur Mischung B 10:1 bis 1:10 beträgt und die Mischung A sich gegenüber der Mischung B weitgehend chemisch inert verhält.

Weiterhin betrifft die Erfindung wäßrige Dispersionen solcher Überzugsmittel sowie deren Einsatz in Tauchbädern für die kathodische Elektrotauchlackierung.

Aus der US-A 4 639 299 sind wasserdispergierbare Beschichtungen bekannt, die durch Polymerisation von blockierten Monoisocyanaten, welche radikalisch polymerisierbare Doppelbindungen enthalten, mit ungesättigten Monomeren wie beispielsweise Acrylaten oder Styrol in Gegenwart von Aminoepoxyharzen erhalten werden.

In der US-A 4 167 499 werden Pfropfcopolymere beschrieben, wobei ein Monoepoxidharz auf eine Acrylatkette gepfropft wird. Solche Copolymere werden dann zusammen mit konventionellen Aminoplastvernetzern eingesetzt.

Aus der EP-A-385 292 sind kathodisch abscheidbare Überzugsmittel bekannt, in denen Harze auf Basis von Butadien/Acrylnitril-Copolymerisaten im Gemisch mit basischen Epoxyharzen und konventionellen Vernetzern eingesetzt werden, wobei sich nach Aushärtung solcher Gemische kleine, eigenständige Kautschukdomänen ausbilden.

Aus der EP-A 186 306 sind selbstvernetzende dien-funktionell-blockierte dienophil-funktionelle Aminoepoxyharze bekannt, die durch Reaktion von Diepoxiden mit einem aminfunktionellen Dien- und Dienophil-Kettenverlängerer und sekundären Aminen hergestellt werden.

Weiterhin ist allgemein bekannt, daß man sich gegenseitig durchdringende, voneinander unabhängige polymere Netzwerke herstellen kann, indem man beispielsweise mindestens eines dieser Netzwerke in Gegenwart des anderen polymerisiert oder vernetzt (sogenannte "interpenetrating polymer networks", "IPN"). Solche Systeme sind bisher beispielsweise in Klebstoffen, schlagzähmodifizierten Kunststoffen oder Gießharzen eingesetzt worden. (Siehe: "Interpenetrating Polymer Networks", in "Encyclopedia of Polymer Science and Engineering" Vol. 8, S. 279-340, Wiley Interscience Publication).

Aus der US-A 4 302 553 sind interpenetrierende Polymernetzwerke aus mindestens zwei verschiedenen Netzwerken bekannt, die für Filmbeschichtungen, Klebstoffe, Elastomere etc. eingesetzt werden können, wobei jedoch keine wäßrigen Beschichtungszusammensetzungen beschrieben sind.

Lackschichten, die durch kathodische Elektrotauchlackierung hergestellt werden, sollten gleichzeitig folgende wesentliche Eigenschaften aufweisen:
- guten Korrosionsschutz
- gute Elastizität.

Bisher bekannte Systeme weisen häufig nur eine von beiden Eigenschaften auf, d.h. Lacküberzüge mit einem guten Korrosionsschutzverhalten sind unelastisch, während hochelastische Überzüge schlechte Korrosionsschutzeigenschaften zeigen.

Aufgabe der vorliegenden Erfindung war es, Systeme zur Verfügung zu stellen, die beiden Kriterien gerecht werden.

Demgemäß wurden die eingangs definierten wasserverdünnbaren Überzugsmittel gefunden, die nach Protonieren mit Säure und Dispergieren in Wasser in Elektrotauchlackierbädern eingesetzt werden können.

Als Komponente A₁ kommen oligomere oder polymere Polyadditions- oder Polykondensationsverbindungen in Betracht, deren mittleres Molekulargewicht 200 bis 20.000 beträgt und die pro Molekül im Mittel mindestens zwei Hydroxylgruppen und im Mittel mindestens zwei primäre und/oder sekundäre und/oder tertiäre Aminogruppen tragen.

Solche Verbindungen können beispielsweise Reaktionsprodukte von Epoxyverbindungen mit primären oder sekundären Aminen sein.

Geeignete Epoxyverbindungen sind Glycidylether von Polyphenolen, welche im Mittel 2 bis 20 Hydroxylgruppen pro Molekül tragen und die in bekannter Weise durch Veretherung mit Epihalohydrin im alkalischen Milieu erhalten werden können. Beispiele für geeignete Phenolverbindungen sind 2,2-Bis-(4-hydroxyphenyl)-propan (Bisphenol A), 4,4'-Dihydroxy-benzophenon, 1,1-Bis-(4-hydroxyphenyl)-ethan, 1,1-Bis-(4-hydroxyphenyl-isobutan, 2,2-Bis-(4-hydroxy-tert.-butylphenol)-propan, Bis-(4-hydroxynaphthyl)-methan oder 1,5-Dihydroxynaphthalin.

Weitere geeignete Epoxyverbindungen sind Glycidylether von Novolaken, die ebenfalls in bekannter Weise erhalten werden können.

Eine andere geeignete Klasse von Epoxyverbindungen sind Polyglycidylether von gesättigten Polyalkoholen wie beispielsweise Ethylenglykol, Diethylenglykol, Triethylenglykol, 1,2-Propylenglykol, Propan-1,3-diol, 1,2-Propylenglykol, Propan-1,3-diol, Pentan-1,5-diol, Hexan-1,2,6-triol, Glycerol oder 2,2-bis-(4-hydroxycyclohexyl)-propan.

Es ist auch möglich Polyglycidylether von gesättigten Polycarbonsäuren zu verwenden.

Geeignete Epoxyverbindungen zur Herstellung der Komponente A1 weisen ein mittleres Molekulargewicht Mₙ von 180-8000 auf und tragen im Mittel mindestens zwei Epoxygruppen pro Molekül.

Geeignete primäre oder sekundäre Amine, die mit den Epoxygruppen reagieren können sind beispielsweise gesättigte C₁-C₈-Monoamine wie Methylamin, Ethylamin, Propylamin, Isopropylamin oder Butylamin, Dimethylamin, Diethylamin, Diisopropylamin, Methylethylamin, Dibutylamin und ähnliche. Ebenfalls geeignet sind gesättigte C₂-C₆-Alkanolamine wie Diethanolamin oder Methylethanolamin.

Die erwähnten Amine können auch weitere funktionelle Gruppen tragen, soweit diese nicht mit den Epoxygruppen reagieren. Weitere geeignete Amine sind gesättigte Diamine mit 2-12 Kohlenstoffatomen, wobei höchstens eine der Aminogruppen auch eine tertiäre Aminogruppe sein kann, beispielsweise Ethylendiamin, Propylendiamin, Butylendiamin, Hexamethylendiamin, Dimethylaminopropylamin oder Diethylaminopropylamin.

Weiterhin eignen sich auch Amidoamine, die in bekannter Weise durch Kondensation von gesättigten primären C₂-C₁₂-Diaminen mit gesättigten Mono- oder Dicarbonsäuren erhalten werden können. Geeignete Carbonsäuren sind beispielsweise Adipinsäure oder dimerisierte Fettsäuren wie beispielsweise Dilinolensäure.

Bevorzugte Aminoepoxyharze sind Umsetzungsprodukte aus Diglyidylethern des Bisphenol A mit Alkanolaminen.

Als Komponente A₂ kommen Vernetzer in Betracht, die gegenüber den Hydroxyl- und Aminogruppen der Komponente A₁ reaktiv sind. Geeignete Vernetzer sind beispielsweise vollständig blockierte Polyisocyanatvernetzer. Als Isocyanatkomponenten kommen dabei gesättigte aliphatische oder gesättigte cycloaliphatische oder aromatische Isocyanate mit 2-3 Isocyanatgruppen pro Molekül in Betracht, beispielsweise Hexamethylendiisocyanat, das Isocyanurat des Hexamethylendiisocyanat, Isophorondiisocyanat, Toluylendiisocyanat, 4,4'-Diphenyl-methan-diisocyanat (4, 4'-MDI), sowie Isomerengemische von 4,4'-MDI mit 2,4'-MDI oder 2,2'-MDI.

Als Blockierungsmittel können in bekannter Weise OH- und -N-H-funktionelle Verbindungen eingesetzt werden.

Bevorzugte blockierte Isocyanatvernetzer sind mit n-Butylglykol verkapptes Toluylendiisocyanat, dimerisiertes Hexamethylendiisocyanat, welches mit Dibutylamin verkappt ist oder mit Butylglykol verkapptes 4,4'-MDI.

Die Blockierung kann in bekannter Weise in Lösungsmitteln wie Toluol oder Methyl-isobutyl-keton bei 30-100°C vorgenommen werden.

Weitere geeignete Vernetzerkomponenten A₂ sind phenolische Mannichbasen gemäß der DE-A-34 22 457.

Bevorzugte Komponenten A₂ sind solche Vernetzungsmittel, die durch Umsetzung einer aliphatischen und einer aromatischen Polyhydroxyverbindung mit einem aliphatischen und/oder cycloaliphatischen Polyisocyanat und einem Blockierungsmittel, beispielsweise Amine, erhalten werden. Derartige Komponenten sind beispielsweise in der EP-A-385 293 beschrieben. Weiterhin kommen als Vernetzungsmittel A₂ Umsetzungsprodukte gemäß der deutschen Patentanmeldung P 4201054.3 in Betracht, zu deren Herstellung man ein Umsetzungsprodukt aus einem Hydroxylgruppen tragenden Epoxiharz und einem monofunktionellen Isocyanat einer Umsetzung mit Formaldehyd und sekundären Aminen unterwirft.

Die Komponenten A₁ und A₂ werden in solchen Mengen eingesetzt, daß eine Mischung aus beiden 5-95 Gew.-%, vorzugsweise 30-70 Gew.-% an A₁ und 5-50 Gew.-%, vorzugsweise 20-50 Gew.-% an A₂ enthält.

Als Komponenten B₁ kommen monomere, oligomere oder polymere radikalisch polymerisierbare Verbindungen mit einem mittleren Molekulargewicht M_{w} von 200-10.000 in Betracht, die pro Molekül mindestens zwei olefinische Doppelbindungen enthalten und die sich gegenüber der Mischung A weitgehend chemisch inert verhalten.

Geeignete Verbindungen in diesem Sinne sind beispielsweise die Diester aus gesättigten C₂-C₁₀-Diolen und Acrylsäure oder Methacrylsäure wie Ethylenglykol-diacrylat oder -dimethacrylat, Propylenglykol-diacrylat oder -dimethacrylat, 1,4-Butandiol-diacrylat- oder -dimethacrylat. Weiterhin kommen die Divinylether von gesättigten C₂-C₁₀-Diolen in Betracht.

Ebenso eignen sich Umsetzungsprodukte von gesättigten C₂-C₁₀-Polyolen mit Glycidyl-acrylat oder Glycidylmethacrylat, wobei alle Hydroxyfunktionen mit den entsprechenden Glycidylgruppen abreagiert sind, beispielsweise ein Umsetzungsprodukt aus 1 Mol Trimethylolpropan und 3 Molen Glycidylmethacrylat.

Weiterhin kommen auch polymere Verbindungen in Betracht, die auf bekannte Weise durch Polymerisation der vorstehend genannten Monomere erhältlich sind und mindestens zwei nicht umgesetzte olefinische Doppelbindungen enthalten.

Auch Verbindungen, die durch vollständige Umsetzung der Epoxidgruppen eines Polyepoxids mit Hydroxyalkyl(meth)acrylaten erhältlich sind, kommen als Komponenten B₁ in Betracht. Geeignete Hydroxyalkyl(meth)acrylate sind dabei die Monoester von C₂-C₁₀-Diolen und Acrylsäure oder Methacrylsäure, wie z.B. 2-Hydroxyethyl-acrylat oder -methacrylat, 3-Hydroxypropyl-acrylat oder -methacrylat, 2-Hydroxypropyl-acrylat oder -methacrylat oder 4-Hydroxybutyl-acrylat oder -methacrylat.

Als Polyepoxyverbindungen können beliebige Materialien verwendet werden, insbesondere, wenn sie ein mittleres Molekulargewicht von 200 bis 6000 und im Mittel 1,5 bis 3,0 Epoxidgruppen pro Molekül enthalten, vorzugsweise Verbindungen mit 2 Epoxidgruppen pro Molekül. Bevorzugt sind Epoxidharze mit mittleren Molekulargewichten von 350 bis 5000, insbesondere 350 bis 2000. Besonders bevorzugte Epoxidharze sind z.B. Glycidylether von im Mittel mindestens 2 phenolische Hydroxylgruppen im Molekül enthaltenden Polyphenolen, die sich in üblicher Weise durch Veretherung mit einem Epihalohydrin in Gegenwart von Alkali herstellen lassen. Beispiele für geeignete Phenolverbindungen sind 2,2-Bis-(4-hydroxyphenyl)-propan (Bisphenol A), 4,4'-Dihydroxybenzophenon, 1,1-Bis-(4-hydroxyphenyl)-ethan, 1,1-Bis-(4-hydroxyphenyl)-isobutan, 2,2-Bis-(4-hydroxytert.-butylphenyl)-propan, Bis-(4-hydroxynaphthyl)-methan und 1,5-Dihydroxynaphthalin. In manchen Fällen ist es wünschenswert, aromatische Epoxidharze mit höherem Molekulargewicht einzusetzen. Diese werden erhalten, indem man die oben genannten Diglycidylether mit einem Polyphenol, wie beispielsweise 2,2-Bis-(4-hydroxyphenyl)-propan reagieren läßt und dann die erhaltenen Produkte mit Epichlorhydrin unter Herstellung von Polyglycidylethern weiter umsetzt.

Eine andere geeignete Klasse von Epoxidharzen sind Polyglycidylether von phenolischen Novolakharzen, wodurch die Funktionalität von 2 bis auf etwa 6 Glycidylgruppen pro Molekül gesteigert werden kann. Ebenfalls geeignet sind Polyglycidylether von mehrwertigen Alkoholen wie von Ethylenglykol, Diethylenglykol, Triethylenglykol, 1,2-Propylenglykol, 1,3-Propandiol, 1,5-Pentandiol, 1,2,6-Hexantriol, Glycerin und 2,2-Bis-(4-hydroxycyclohexyl)-propan. Es können auch Polyglycidylester von Polycarbonsäuren verwendet werden.

Weiterhin kommen als Komponenten B₁ auch acrylat- oder methacrylat-modifizierte Polyurethane in Betracht. Als Polyisocyanate für die Herstellung der Polyurethan-Vorstufen kommen vor allem aromatische Polyisocyanate wie 4,4'-Diphenyl-methan-diisocyanat oder dessen Stellungsisomere, oder Gemische dieser Isomere, Toluylendiisocyanat oder 1,5-Naphthyldiisocyanat, aber auch aliphatische oder cycloaliphatische Isocyanate wie Hexamethylendiisocyanat oder Isophorondiisocyanat. Als Polyole kommen mehrwertige Alkohole wie Ethylenglykol, Diethylenglykol, Triethylenglykol, 1,2-Propylenglykol, 1,4-Butandiol, Trimethylolpropan oder auch Polyesterole wie Umsetzungsprodukte aus Trimethylolpropan und ε-Caprolacton in Betracht.

Die Herstellung von Polyurethanen ist an sich bekannt, wobei die Mengenverhältnisse und die Reaktionsführung so gewählt werden, daß pro Polyurethanmolekül noch mindestens zwei freie Isocyanatgruppen für die Umsetzung mit einem Hydroxyalkyl-acrylat oder -methacrylat zur Verfügung stehen. Die Acrylatmodifizierung kann unter allgemein bekannten Bedingungen durchgeführt werden.

Bevorzugte Komponenten B₁ sind Polyacrylate, die aus Umsetzungsprodukten von Glycidyl(meth)acrylat und Trimethylolpropan aufgebaut sind sowie (meth)acrylatmodifizierte Polyurethane.

Als Komponente B₂ kommen Radikalstarter mit einer Zerfallstemperatur von 50-150, vorzugsweise 80-130°C in Betracht, beispielsweise Di-tert.-butylperoctoat oder Dibutylperbenzoat.

Die Komponenten B₁ und B₂ werden in solchen Mengen eingesetzt, daß eine Mischung aus beiden 90-99,9 Gew.-%, vorzugsweise 95-99 Gew.-% an B₁ und 0,1-10 Gew.-%, vorzugsweise 1-5 Gew.-% an B₂ enthält.

In den erfindungsgemäßen Überzugsmitteln beträgt das Mengenverhältnis der Mischung A zur Mischung B 10:1-1:10, vorzugsweise 10:1-1:1.

Dabei soll sich die Mischung A gegenüber der Mischung B weitgehend chemisch inert verhalten.

Die erfindungsgemäßen Überzugsmittel werden vorzugsweise in Form ihrer wäßrigen Dispersion eingesetzt.

Zur Herstellung dieser Dispersionen werden die Komponenten A₁, A₂, B₁ und B₂ üblicherweise bei Raumtemperatur innig vermischt und anschließend mit einer Säure protoniert. Als Säuren können dabei organische Säuren wie Essigsäure, Propionsäure oder Milchsäure oder anorganische Säuren wie Phosphorsäure verwendet werden.

Die Menge an Säure wird dabei so bemessen, daß 20-80 %, bevorzugt 25-60 % der im Harz enthaltenen protonierbaren Gruppen neutralisiert werden.

Anschließend erhitzt man das Gemisch auf 40-50°C, versetzt unter Rühren mit Wasser und destilliert bei 80 mbar und 40-50°C noch vorhandene organische Lösungsmittel als Azeotrop mit Wasser ab. Danach wird durch Zugabe von Wasser ein Feststoffgehalt im Bereich von 5-50 Gew.-%, vorzugsweise 10-40 Gew.-%, besonders bevorzugt 20-35 Gew.-%, eingestellt.

Diese wäßrigen Dispersionen werden dann zur Herstellung von Tauchbädern für die kathodische Elektrotauchlackierung verwendet.

Solche Elektrotauchbäder enthalten die erfindungsgemäßen Überzugsmittel in Mengen von 5-30, vorzugsweise 10-25 Gew.-%, bezogen auf den Gesamtfestkörper.

Weiterhin können die Tauchbäder noch Pigmentpasten und übliche Hilfsmittel enthalten. Pigmentpasten sind beispielsweise aus einem Reibharz und Pigmenten wie Titandioxid, Ruß oder Aluminiumsilikaten sowie Hilfs- und Dispergiermitteln erhältlich.

Die Abscheidung der Lackfilme bei der kathodischen Elektrotauchlackierung erfolgt üblicherweise bei 20-40°C, vorzugsweise 25-35°C, während 60-300 sec bei einer Abscheidespannung von 50-500 V. Der zu beschichtende Gegenstand wird als Kathode geschaltet.

Anschließend können die so abgeschiedenen Überzüge bei Temperaturen im Bereich von 80-200°C, vorzugsweise 120-180°C eingebrannt werden.

Die erfindungsgemäßen Überzüge weisen eine gute Elastizität und eine hohe Korrosionsbeständigkeit auf und eignen sich daher hervorragend als Grundierungen für Automobilkarosserien.

### Herstellung der Komponente A₁

### Beispiel 1

678,4 g eines Diglycidylethers auf Basis von Bisphenol A mit einem Epoxidäquivalentgewicht von 1380 wurden bei 100°C in 500 g Methylisobutylketon und 330 g einer bei 100°C siedenden Kohlenwasserstofffraktion (Solvesso 100 der Firma Exxon) gelöst. Anschließend wurden nach Abkühlen des Reaktionsgemisches auf ca. 70°C 126 g Dibutylamin so zugetropft, daß die Temperatur 70°C nicht überstieg und noch 2 Stunden lang bei 70°C gerührt. Das so erhaltene Produkt hatte bei einem Feststoffgehalt von 47,5 Gew.-% eine Viskosität von 125 mPa·s bei 25°C. Die zugrundeliegenden Polymeren wiesen OH-Zahlen von 106 mg KOH/g Festsubstanz und Aminzahlen von 34,9 mg KOH/g Festsubstanz auf bei mittleren Molekulargewichten M_{w} von 3800.

### Herstellung der Komponenten A₂

### Beispiel 2

570,3 g trimerisiertes Hexamethylendiisocyanat wurden in 208 g Methylisobutylketon gelöst und binnen 1 Stunde mit 261 g Methylethylketoxim tropfenweise versetzt. Man rührte solange nach, bis der NCO-Wert auf 0 abgefallen war. Das Produkt hatte einen Feststoffgehalt von 80 Gew.-%.

### Beispiel 3

10.000 g Isophorondiisocyanat wurden in 2500 g Toluol gelöst, mit 10,0 g Dibutylzinndilaurat versetzt und auf 60°C erhitzt. Dann wurde eine Lösung von 804 g Trimethylolpropan und 3078 g Bisphenol A in 1234 g Toluol und 1234 g Methylisobutylketon so zugetropft, daß die Reaktionstemperatur 60°C nicht überschritt.

Das Reaktionsgemisch wurde anschließend 1,5 Stunden bei 60°C gehalten, dann mit 3350 g Toluol verdünnt, worauf 5805 g Dibutylamin bei 80°C binnen 1 Stunde zugetropft wurden. Das Reaktionsgemisch wurde dann solange gerührt, bis der NCO-Wert auf 0 abgesunken war. Das Produkt hatte einen Feststoffgehalt von 70 Gew.-% und einen K-Wert (3 %ig in N-Methylpyrrolidon) von 12,3.

### Herstellung der Komponenten B₁

### Beispiel 4

Eine Mischung aus 134,2 g Trimethylolpropan, 0,35 g Hydrochinon und 430,5 g Glycidylmethacrylat wurde langsam auf 80°C erhitzt und anschließend solange gerührt, bis der Epoxidwert auf 0 abgefallen war. Das so erhaltene Polymer hatte eine Viskosität von 860 mPa·s bei 25°C und ein mittleres Molekulargewicht M_{w} von 580.

### Beispiel 5

Eine Mischung aus 100,5 g eines Reaktionsproduktes aus 134,2 g Trimethylolpropan und 348 g Caprolacton mit einem Molekulargewicht von 490, sowie 262,4 g 4,4'-Diphenylmethandiisocyanat und 500 g Methylisobutylketon wurden auf 40°C erwärmt, mit 0,1 g Dibutylzinndilaurat versetzt und solange bei 65 bis 70°C gehalten, bis der NCO-Wert auf 9,0 abgesunken war. Danach wurden bei 60°C zunächst 0,1 g Hydrochinon zugegeben und davon 130,2 g Hydroxyethylmethacrylat langsam zugetropft.

Anschließend wurde solange bei 60°C gerührt, bis der NCO-Wert auf 0 gesunken war.

Die so erhaltene Polymerlösung wies bei einem Feststoffgehalt von 53,6 Gew.-% eine Viskosität von 1,08 Pa·s bei 25°C auf, wobei das mittlere Molekulargewicht M_{w} des Polymers 6500 betrugt.

### Komponente B₂:

Als Radikalstarter wurde Di-tert.-butyl-peroctoat eingesetzt. Die jeweiligen verwendeten Mengen sind in Tabelle I aufgelistet.

### Herstellung von Pigmentpasten

640 g eines Diglycidylethers auf Basis Bisphenol A und Epichlorhydrin mit einem Epoxidäquivalentgewicht von 485 und 160 g eines solchen mit einem Epoxidäquivalentgewicht von 188 wurden bei 100°C gemischt. In einem weiteren Gefäß wurden 452 g Hexamethylendiamin vorgelegt, auf 100°C erhitzt und 720 g der obigen Harzmischung innerhalb einer Stunde zugegeben, wobei leicht gekühlt werden mußte, um die Temperatur bei 100°C zu halten. Nach weiteren 30 Minuten wurde unter vermindertem Druck und Temperaturerhöhung das überschüssige Hexamethylendiamin abgezogen, wobei gegen Ende der Destillation eine Temperatur von 205°C und ein Druck von 30 bar erreicht wurden. Anschließend setzte man 57,6 g Stearinsäure, 172,7 g dimere Fettsäure und 115 g Xylol zu. Dann wurde innerhalb von 90 Minuten das gebildete Reaktionswasser bei 175 bis 180°C azeotrop abdestilliert. Anschließend wurde mit 58 g Butylglykol und 322 g Isobutanol verdünnt. Das Produkte hatte einen Feststoffgehalt von 70 % und eine Viskosität, gemessen mit einem Platte-Kegel-Viskosimeter bei 75°C, von 2240 mPa·s.

110 g des so erhaltenen Kunstharzes wurden in einer Kugelmühle mit 36 g Ethylenglykolmonobutylether, 3 g Essigsäure, 170 g Titandioxid, 18 g Bleisilikat, 4,5 g Ruß und 170 g Wasser bis zu einer Kornfeinheit von < 7 µm vermahlen.

### Herstellung der Elektrotauchlackierbäder I-X

Die in Tabelle I aufgelisteten Mengen der Komponenten A₁ bis B₂ wurden zunächst bei Raumtemperatur innig vermischt. Nach Zugabe der jeweils angegebenen Menge Essigsäure wurde auf 50°C erhitzt und 850 g Wasser zugegeben. Anschließend wurden organische Lösungsmittel als Azeotrop mit Wasser bei 40 bis 50°C und 70-90 mbar abdestilliert. Daraufhin wurde durch Zugabe von Wasser ein Feststoffgehalt der Dispersionen von 35 Gew.-% eingestellt.

Die Dispersionen wurden mit der Pigmentpaste versetzt (Mengen siehe Tabelle I) und anschließend wurde soviel Wasser zugegeben, daß ein Feststoffgehalt von 20 Gew.-% bei einem Badvolumen von 5 l erreicht wurde.

Die Elektrotauchbäder wurden 168 Stunden bei 30°C gerührt. An kathodisch geschalteten zinkphosphatierten Prüftafeln aus Stahl wurden innerhalb von 120 Sekunden Lackfilme abgeschieden. Anschließend wurden diese Lackfilme 25 min bei 165°C eingebrannt.

Die Abscheidebedingungen und die Prüfergebnisse sind in Tabelle II aufgelistet.

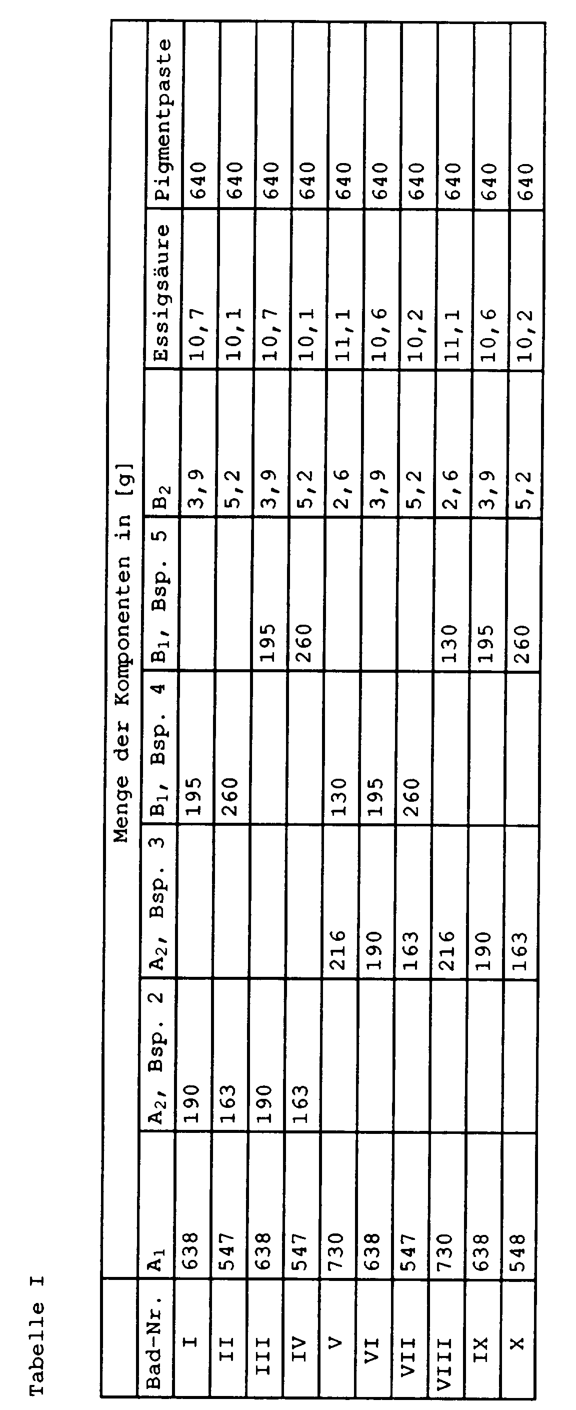

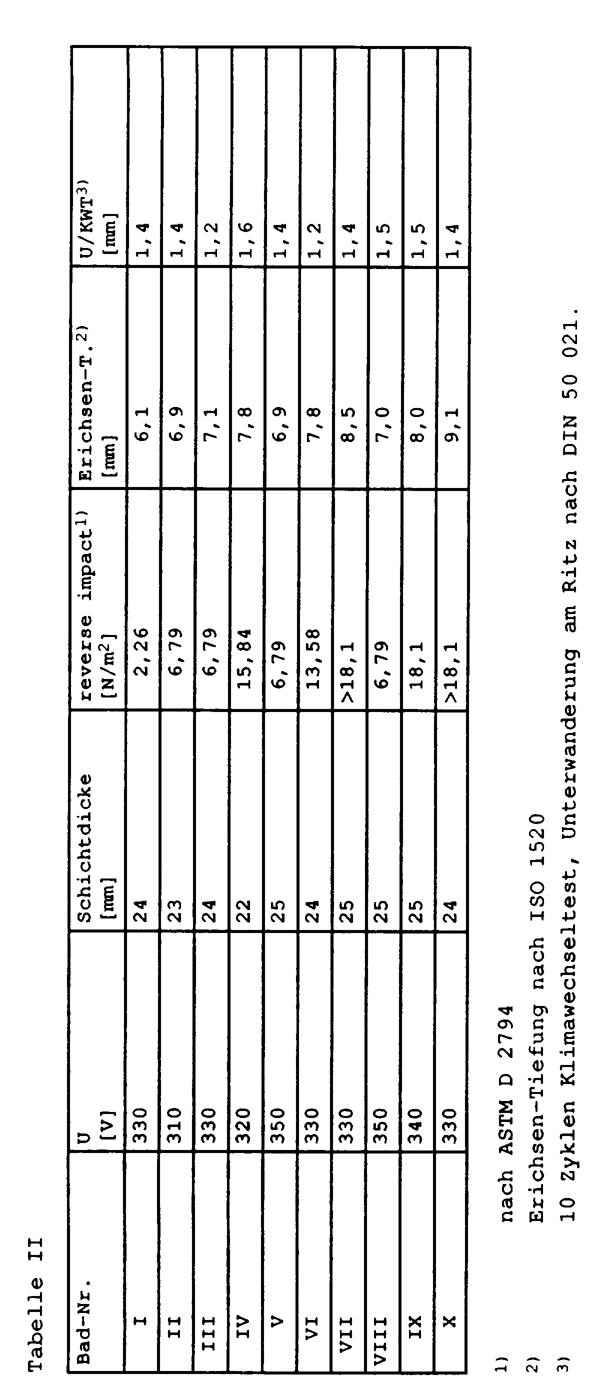

## Patentansprüche

1. Wasserverdünnbare Überzugsmittel, enthaltend
A. eine Mischung aus
A₁. 50-95 Gew.-% einer oder mehrerer oligomerer oder polymerer Polyadditions- oder Polykondensationsverbindungen mit einem mittleren Molekulargewicht von 200 bis 20.000, welche pro Molekül mindestens zwei Hydroxylgruppen und mindestens zwei primäre und/oder sekundäre Aminogruppen enthalten, und
A₂. 5-50 Gew.-% eines gegenüber der Komponente A₁ reaktiven Vernetzers
und
B. eine Mischung aus
B₁. 90-99,9 Gew.-% einer oder mehrerer radikalisch polymerisierbarer Verbindungen des mittleren Molekulargewichts von 100 bis 10.000, die pro Molekül mindestens zwei olefinische Doppelbindungen enthalten, und
B₂. 0,1-10 Gew.-% eines Radikalstarters mit einer Zerfallstemperatur im Bereich von 50-150°C,
wobei das Mengenverhältnis der Mischung A zur Mischung B 10:1 bis 1:10 beträgt und die Mischung A sich gegenüber der Mischung B weitgehend chemisch inert verhält.

2. Wasserverdünnbare Überzugsmittel nach Anspruch 1, die als Komponente A₁ ein Aminoepoxyharz enthalten.

3. Wasserverdünnbare Überzugsmittel nach Anspruch 1 und 2, die als Komponente A₂ einen blockierten PolyisocyanatVernetzer enthalten.

4. Wasserverdünnbare Überzugsmittel nach einem der Ansprüche 1 und 2 die als Komponente A₂ eine phenolische Mannichbase enthalten.

5. Wasserverdünnbare Überzugsmittel nach einem der Ansprüche 1 bis 4, die als Komponente B₁ ein Polyacrylat enthalten.

6. Wasserverdünnbare Überzugsmittel nach einem der Ansprüche 1 bis 4, die als Komponente B₁ methacrylatmodifiziertes Polyurethan enthalten.

7. Wäßrige Dispersionen, enthaltend 5-50 Gew.-%, bezogen auf den Gesamtfestkörpergehalt eines Überzugsmittels gemäß einem der Ansprüche 1 bis 6.

8. Elektrotauchlackierbäder für die kathodische Elektrotauchlackierung, enthaltend 5-30 Gew.-% eines Überzugsmittels gemäß einem der Ansprüche 1 bis 6.

9. Elektrotauchlackierbäder, nach Anspruch 8, enthaltend zusätzlich Pigmentpaste und Hilfsmittel.

10. Beschichteter Gegenstand erhältlich durch kathodische Abscheidung eines Überzugsmittels gemäß einem der Ansprüche 1 bis 6.

## Claims

1. Water-thinnable coating compositions comprising
A. a mixture of
A₁. 50-95 % by weight of one or more oligomeric or polymeric polyaddition or polycondensation compounds which have on average a molecular weight of from 200 to 20,000 and contain per molecule at least two hydroxyl groups and at least two primary and/or secondary amino groups, and
A₂. 5-50 % by weight of a crosslinker that is reactive toward component A₁,
and
B. a mixture of
B₁. 90-99.9 % by weight of one or more radical- polymerizable compounds which have an average molecular weight of from 100 to 10,000 and contain per molecule at least two olefinic double bonds, and
B₂. 0.1-10 % by weight of a free radical initiator having a decomposition temperature within the range 50-150°C,
the ratio of mixture A to mixture B being from 10:1 to 1:10 and mixture A being substantially chemically inert toward mixture B.

2. Water-thinnable coating compositions as claimed in claim 1 wherein component A₁ is an amino-epoxy resin.

3. Water-thinnable coating compositions as claimed in either of claims 1 and 2 wherein component A₂ is a blocked polyisocyanate crosslinker.

4. Water-thinnable coating compositions as claimed in either of claims 1 and 2 wherein component A₂ is a phenolic Mannich base.

5. Water-thinnable coating compositions as claimed in any of claims 1 to 4 wherein component B₁ is a polyacrylate.

6. Water-thinnable coating compositions as claimed in any of claims 1 to 4 wherein component B₁ is a methacrylate-modified polyurethane.

7. Aqueous dispersions containing 5-50 % by weight, based on the total solids content, of a coating composition as claimed in any of claims 1 to 6.

8. Electrocoating baths for cathodic electrocoating containing 5-30 % by weight of a coating composition as claimed in any of claims 1 to 6.

9. Electrocoating baths as claimed in claim 8 additionally containing pigment paste and auxiliaries.

10. A coated article obtainable by cathodic deposition of a coating composition as claimed in any of claims 1 to 6.

## Revendications

1. Agents de revêtement diluables dans l'eau, contenant
A. un mélange
A₁. de 50-95 % en poids d'un ou de plusieurs composés de polyaddition ou de polycondensation oligomères ou polymères ayant un poids moléculaire moyen de 200 à 20 000, qui contiennent par molécule au moins deux groupements hydroxyles et au moins deux groupements amino primaires et/ou secondaires, et
A₂. de 5-50 % en poids d'un agent de réticulation réactif vis-à-vis du composant A₁
et
B. un mélange
B₁. de 90-99,9 % en poids d'un ou de plusieurs composés polymérisables de manière radicalaire d'un poids moléculaire moyen de 100 à 10 000, qui contiennent par molécule au moins deux liaisons doubles oléfiniques, et
B₂. de 0,1-10 % en poids d'un agent initiateur radicalaire ayant une température de décomposition dans le domaine de 50-150°C,
le rapport quantitatif du mélange A au mélange B étant de 10:1 à 1:10 et le mélange A se comportant vis-à-vis du mélange B dans une grande mesure de manière chimiquement inerte.

2. Agents de revêtement diluables dans l'eau selon la revendication 1, qui contiennent en tant que composant A une résine aminoépoxyde.

3. Agents de revêtement diluables dans l'eau selon la revendication 1 et 2, qui contiennent en tant que composant A₂ un agent de réticulation de polyisocyanate bloqué.

4. Agents de revêtement diluables dans l'eau selon l'une quelconque des revendications 1 et 2, qui contiennent en tant que composant A₂ une base de Mannich phénolique.

5. Agents de revêtement diluables dans l'eau selon l'une quelconque des revendications 1 à 4, qui contiennent en tant que composant B₁ un polyacrylate.

6. Agents de revêtement diluables dans l'eau selon l'une quelconque des revendications 1 à 4, qui contiennent en tant que composant B₁ un polyuréthane modifié au méthacrylate.

7. Dispersions aqueuses, contenant 5-50 % en poids, par rapport à la teneur en matières solides totale d'un agent de revêtement conformément à l'une quelconque de revendications 1 à 6.

8. Bains de vernissage de trempage électrophorétique pour l'électrodéposition cathodique, contenant 5-30 % en poids d'un agent de revêtement conformément à l'une quelconque des revendications 1 à 6.

9. Bains de vernissage de trempage électrophorétique, selon la revendication 8, contenant en plus des pâtes pigmentaires et des additifs.

10. Article revêtu que l'on peut obtenir par dépôt cathodique d'un agent de revêtement conformément à l'une quelconque des revendications 1 à 6.
